# EUROPÄISCHE PATENTSCHRIFT

(11) **EP 2 545 130 B1**
(45) Veröffentlichungstag und Bekanntmachung des Hinweises auf die Patenterteilung: **25.02.2015**
(21) Anmeldenummer: 11708237.0
(22) Anmeldetag: 10.03.2011
(51) Int. Cl.: C09J 5/06, B32B 37/08, B41M 5/52

(54) **VERFAHREN ZUM KASCHIEREN EINER FLEXIBLEN MATERIALLAGE AUF EINEN DREIDIMENSIONAL KONTURIERTEN TRÄGER SOWIE VORRICHTUNG HIERFÜR**
METHOD FOR COATING A FLEXIBLE SUBSTRATE ON A THREE DIMENSIONAL STRUCTURED CARRIER AND APPARATUS THEREOF
PROCÉDÉ DE REVETEMENT D'UN SUBSTRAT SOUPLE SUR UN SUPPORT TRIDIMENSIONNEL STRUCTURÉ ET APPAREIL POUR CELUI-CI

(30) Priorität: 11.03.2010 DE 102010002766
(43) Veröffentlichungstag der Anmeldung: 16.01.2013
(73) Patentinhaber: Lisa Dräxlmaier GmbH, 84137 Vilsbiburg (DE)
(72) Erfinder: AUSSERMEIER, Josef, 84494 Neumarkt-Sankt Veit (DE)
(74) Vertreter: Buchholz, Thomas
(86) Internationale Anmeldenummer: PCT/EP2011/053603
(87) Internationale Veröffentlichungsnummer: WO 2011/110623

(56) Entgegenhaltungen:
- WO-A1-01/85862
- WO-A1-01/85862
- WO-A2-2008/043812
- DE-A1- 10 106 888
- DE-A1- 10 235 831
- DE-A1-102006 055 474

## Beschreibung

Die vorliegende Erfindung betrifft ein Verfahren zur Herstellung von Bauteilen, die im Innenraum von Landfahrzeugen, Wasserfahrzeugen und Luftfahrzeugen zum Einsatz kommen können und insbesondere Bauteilen für den Innenraum von Kraftfahrzeugen. Rein beispielhaft fallen hierunter Verkleidungsteile im Bereich der Türen, Armaturentafeln, Handschuhkästen und Mittelkonsolen. Im Besonderen betrifft die vorliegende Erfindung ein Verfahren zum Kaschieren einer flexiblen Materiallage mit einer Oberseite und einer Unterseite auf einen formstabilen Träger mit einer dreidimensionalen Oberflächenkontur sowie eine Vorrichtung hierfür.

Zur Herstellung von mit einer flexiblen Materiallage kaschierten Trägern wird im Stand der Technik primär zwischen dem sogenannten Vakuumkaschieren (auch als Folienkaschieren bezeichnet) und dem sogenannten Presskaschieren unterschieden.

Beim Vakuumkaschieren werden in der Regel Kunststofffolien als flexible Materiallage durch Applikation von Vakuum auf Träger kaschiert. Zur Verbindung zwischen dem Träger und der flexiblen Materiallage dient ein auf den Träger und/oder die flexible Materiallage aufgebrachter Klebstoff.

Das Presskaschieren kommt in der Regel bei der Verarbeitung von flexiblen Materiallagen, die entweder nicht vakuumfähig sind, wie beispielsweise Textilien, oder die nicht bzw. nur bedingt dehnbar sind, wie beispielsweise Leder oder Kunstleder, zum Einsatz. Hierbei werden der Träger und die flexible Materiallage, die in das Werkzeug eingelegt sind, in einem vordefinierten Pressspalt verpresst bzw. gefügt. Auch bei diesem Verfahren wird die Verbindung der Elemente durch auf den Träger und/oder die flexible Materiallage aufgetragenen Klebstoff erzielt.

Vielfach kommt zur Verbindung der zwei Elemente ein thermisch aktivierbarer Klebstoff zum Einsatz, der vorab auf eines oder beide Elemente aufgetragen wurde. Dieser Klebstoff muss vor bzw. während dem Kaschieren aktiviert werden.

Dies kann durch Heizen der Kaschierwerkzeuge bzw. dessen Formhälften erfolgen, so dass der Klebstoff in der Fuge zwischen dem Träger und der flexiblen Materiallage durch Kontakt des Trägers und der flexiblen Materiallage mit der beheizten Form aktiviert wird. Dabei erfolgt die Erwärmung über eine gleichzeitige Erwärmung des Trägers und der flexiblen Materiallage. Es ist jedoch zu berücksichtigen, dass insbesondere bei der Verwendung empfindlicher Materialien nicht beliebig hohe Temperaturen über die Formhälften appliziert werden können.

Alternativ ist es bekannt die Klebstoffschicht vor dem Zusammenbringen von Träger und flexibler Materiallage, z. B. über Heißluft oder Infrarot zu erwärmen.

Gegebenenfalls kann es ferner aufgrund einer geringen Anfangshaftung zwischen den Elementen notwendig sein, die Fugentemperatur in der Fuge zwischen der flexiblen Materiallage und dem Träger durch Kühlen eines oder beider Werkzeuge schnell wieder zu reduzieren.

Des Weiteren ist es aus der DE 102 35 831 A1 bekannt, Träger und flexible Materiallage, die jeweils mit einem thermisch aktivierbaren Klebstoff versehen sind, vor dem Zusammenbringen der beiden Elemente einem NIR-Strahlungsfeld auszusetzen, um den Klebstoff zu aktivieren. Auch die EP 1 280 867 B1 beschreibt die Verwendung einer NIR-Strahlung zur Aktivierung des Klebstoffs zwischen zwei metallischen Schichten, wobei die Strahlung seitlich in einem offen liegenden Randbereich in die Fuge zwischen den Elementen eingebracht wird. Damit sich die NIR-Strahlung von den Randbereichen auch in von außen nicht zugängliche Bereiche fortsetzt, ist es jedoch erforderlich, dass die zwei Elemente reflektierende Eigenschaften haben. Darüber hinaus ist eine kontinuierliche und gleichmäßige Erwärmung des Klebstoffs nicht zu erwarten.

Der oben genannte Stand der Technik hat zum einen den Nachteil, dass das Aktiveren des Klebstoffs vor dem Zusammenbringen des Trägers und der flexiblen Materiallage zu aufwendigen Abstimmungsprozessen mit hohen Anschlussleistungen und nur schwierig nachweisbarer Prozesssicherheit führt. Die Einbringung einer NIR-Strahlung im Randbereich einer Fuge führt zum anderen zu einer ungleichmäßigen Erwärmung des Klebstoffs und erfordert reflektierende Eigenschaften wenigstens eines der beiden Elemente, so dass der Einsatzbereich nur sehr limitiert und insbesondere auf den der vorliegenden Erfindung angestrebten Bereich der Verbindung meist nicht metallischer Materialien nicht ohne Weiteres übertragbar ist.

Die Aufgabe der vorliegenden Erfindung liegt folglich darin, ein Verfahren der eingangs genannten Art, das bei geringen Taktzeiten weniger aufwendig ist, nur wenige Anschlussleistungen erfordert und eine hohe Prozesssicherheit gewährleistet sowie eine zugehörige Vorrichtung zu schaffen.

Diese Aufgabe wird durch ein Verfahren mit den Merkmalen des Anspruchs 1 oder 3 sowie eine Vorrichtung mit den Merkmalen des Anspruchs 7 oder 8 gelöst. Vorteilhafte Weiterbildungen der vorliegenden Erfindung finden sich in den Unteransprüchen.

Der vorliegenden Erfindung liegt der Gedanke zu Grunde, den Klebstoff in der Fuge zwischen dem formstabilen Träger und der flexiblen Materiallage durch eine NIR-(nahes Infrarot)-Strahlung zu aktivieren, die durch die flexible Materiallage hindurch in die Fuge eingebracht wird.

Dementsprechend schlägt die vorliegende Erfindung ein Verfahren zum Kaschieren einer flexiblen Materiallage auf einen formstabilen Träger vor. Die flexible Materiallage weist eine Oberseite und eine Unterseite auf. Die beiden Seiten können gleich gestaltet sein. Alternativ kann die flexible Materiallage eine Gut- und eine Schlechtseite aufweisen, wobei die Gutseite die Oberseite und die Schlechtseite die Unterseite ist. Letzteres ist insbesondere bei der Kaschierung von Dekormaterialien auf einen formstabilen Träger der Fall, bei denen die Oberseite im späteren Bauteil eine Sichtseite bildet, die im Endprodukt, z. B. dem verbauten Verkleidungsteil im Kraftfahrzeug, von einem Betrachter wahrnehmbar ist. Der formstabile Träger ist meist aus Kunststoff, insbesondere Spritzguss, gebildet. Er weist eine dreidimensionale Oberflächenkontur auf. Das bedeutet, dass seine Oberfläche, die später die flexible Materiallage trägt, nicht in einer Ebene liegt, sondern eine dreidimensional gekrümmte Fläche ist. Das Verfahren umfasst die Schritte des Bereitstellens des formstabilen Trägers sowie das Auflegen der Unterseite der flexiblen Materiallage auf die Oberflächenkontur des formstabilen Trägers. Vorab wird in einem separaten Verfahrensschritt auf der Unterseite der flexiblen Materiallage und/oder der Oberflächenkontur des formstabilen Trägers ein thermisch aktivierbarer Klebstoff aufgetragen. Hierzu können beliebige bekannte Verfahren wie beispielsweise ein Sprühauftrag zum Einsatz kommen. Bei dem thermisch aktivierbaren Klebstoff kann es sich um einen Hot-Melt oder einen thermisch aktivierbaren Dispersionsklebstoff handeln. Zur Aktivierung des Klebstoffes schlägt die vorliegende Erfindung die Verwendung einer NIR-(nahes Infrarot)-Strahlung vor. Nahes Infrarot liegt dabei in einem Wellenlängenbereich von 780 nm bis 3000 nm. Diese Bestrahlung ist auf die Oberseite der aufgelegten flexiblen Materiallage gerichtet. Überraschenderweise hat sich herausgestellt, dass selbst bei der Verwendung lichtundurchlässiger flexibler Materiallagen die NIR-Strahlung durch die flexible Materiallage hindurch den Klebstoff in der Fuge zwischen der flexiblen Materiallage und dem formstabilen Träger, d. h. zwischen Oberseite und Oberflächenkontur erwärmt und damit aktiviert. Je nach Beschaffenheit der flexiblen Materiallage und deren Lichtdurchlässigkeit kann es notwendig sein, gewisse maximale Stärken senkrecht zur Ober- und Unterseite einzuhalten. Hierbei liegen die Schichtstärken der flexiblen Materiallage vorzugsweise unter 2,0 mm. Minimale Schichtstärken bei der Verwendung von speziellen Folien beginnen bei 0,2 mm. Insbesondere bei der Verwendung von Leder (Echtleder) und künstlichem Leder sind Schichtstärken unterhalb von 1,4 mm vorteilhaft. Des Weiteren umfasst das erfindungsgemäße Verfahren das Zusammendrücken der flexiblen Materiallage und des formstabilen Trägers. Dies kann nach und/oder während der Aktivierung des Klebstoffs, d. h. der Bestrahlung durch die NIR-Strahlung erfolgen. Bevorzugterweise erfolgt das Zusammendrücken jedoch vor der Bestrahlung, so dass die flexible Materiallage und der Träger bereits lagegenau fixiert sind, ohne dass sie sich noch relativ zueinander verschieben können. Durch die erfindungsgemäße Ausgestaltung wird ein Verfahren geschaffen, das mit niedrigen Taktzeiten prozesssicher und ohne hohe Abstimmungsvorgänge durchgeführt werden kann.

In einer ersten Ausführungsform kommt die vorliegende Erfindung in einem Presskaschierverfahren zum Einsatz, wobei das Zusammendrücken der flexiblen Materiallage und des formstabilen Trägers durch Schließen einer ersten den formstabilen Träger haltenden Formhälfte und einer zweiten konturgebenden Formhälfte eines Presskaschierwerkzeugs erfolgt. Die zweite konturgebende Formhälfte weist dabei eine Negativkontur des fertigen Bauteils aus formstabilem Träger und flexibler Materiallage, z. B. Dekor, auf. Um die Bestrahlung auf die Oberseite der aufgelegten flexiblen Materiallage aufbringen zu können, ist die zweite Formhälfte wenigstens teilweise für die NIR-Strahlung transparent, so dass die Strahlung im Wesentlichen ungehindert durch die zweite Formhälfte dringen kann. Hierbei kann die zweite Formhälfte aus Glas, Plexiglas oder anderen NIR-transparenten Materialien gebildet sein.

Darüber hinaus ist es bei dem erfindungsgemäßen Verfahren vorteilhaft, eine Kühlung vorzusehen, nachdem die Temperatur in der Fuge zwischen der Oberseite der flexiblen Materiallage und der Oberflächenkontur des Trägers die Aktivierungstemperatur des Klebstoffs erreicht hat. Dies kann unmittelbar nach dem Erreichen der gewünschten Fugentemperatur stattfinden, da Kühlung und Erwärmung über unterschiedliche Medien erfolgen. Dadurch können die Gesamtprozesszeit vermindert und Energieeinsparungen beim Heizen und Kühlen erzielt werden. Gemäß einer besonders bevorzugten Ausführungsform und bei Umsetzung in einem Presskaschierverfahren ist es von Vorteil, zumindest die zweite Formhälfte zu kühlen und hierfür ein NIR-transparentes Kühlmittel zu verwenden. Zusätzlich kann es auch von Vorteil sein, die erste Formhälfte zu kühlen. Beim Einsatz in einem Vakuumkaschierverfahren kann bevorzugterweise die den formstabilen Träger haltende Formhälfte bzw. ein entsprechender Halter gekühlt sein, um nach Erreichen der Fugentemperatur eine Abkühlung zu bewirken.

Alternativ wird die vorliegende Erfindung gemäß einer zweiten Ausführungsform im Rahmen eines Vakuumkaschierverfahrens umgesetzt, wobei das Zusammendrücken der flexiblen Materiallage und des formstabilen Trägers durch eine den Umfang der Oberseite der flexiblen Materiallage überragende Folie erfolgt. Diese wird über ein Vakuum gegen die Oberseite der aufgelegten flexiblen Materiallage in Richtung des Trägers gezogen. Hierfür muss die flexible Materiallage eine gewisse Vakuumfähigkeit aufweisen. In dem Träger können dazu Aussparungen vorgesehen sein, durch die das Vakuum anlegbar ist. Bei dieser Ausführungsform ist es bevorzugt, dass die Folie wenigstens teilweise NIR-transparent ist und die Bestrahlung auf die Oberseite der aufgelegten flexiblen Materiallage durch die Folie hindurch erfolgt. Ist die Folie jedoch ausreichend dünn gestaltet, wäre es auch denkbar nicht NIR-transparente Folien zu verwenden. Darüber hinaus ist es bei dieser Ausführungsform bevorzugt, dass ein den formstabilen Träger haltender Halter gekühlt ist, um nach Erreichen der Fugentemperatur durch die NIR-Bestrahlung eine schnelle Absenkung der Fugentemperatur herbeizuführen, um die Taktzeiten niedrig zu halten (siehe oben).

Wie es darüber hinaus eingangs erwähnt wurde, ist es bevorzugt, dass die flexible Materiallage im Wesentlichen lichtundurchlässig ist, d. h. sie ist nicht transparent oder transluzent. Vielmehr ist sie opak.

Rein beispielhaft werden hier als bevorzugte Materialien Leder, künstliches Leder, nicht transparente Kunststofffolien, Textile, Vliese, Gewirke, ... genannt.

Vielfach werden bei Innenausstattungsteilen für Fahrzeuge, insbesondere Kraftfahrzeuge, zwischen einer Dekorschicht und dem Träger Zwischenschichten, z. B. eine Haptikschicht in Form einer Abstandsschicht, z. B. eines Abstandsgewirkes, vorgesehen. Um das erfindungsgemäße Verfahren auch bei solchen Teilen vorteilhaft einzusetzen, ist es bevorzugt, zunächst gemäß dem oben beschriebenen Verfahren die Abstandsschicht als flexible Materiallage auf den Träger zu kaschieren. Nachfolgend und in einem nächsten Arbeitsschritt ist es bevorzugt, eine weitere flexible Materiallage (das Dekor) auf die Oberseite der bereits aufkaschierten Materiallage (Abstandsschicht) aufzubringen. Dies kann gleichfalls mit dem erfindungsgemäßen Verfahren erfolgen, wozu eine weitere flexible Materiallage (Dekorschicht) mit einer Oberseite und einer Unterseite auf die Oberseite der flexible Materiallage aufgelegt wird, nachdem die flexible Materiallage auf den formstabilen Träger aufkaschiert wurde. In diesem Fall wird nur auf der Unterseite der weiteren flexiblen Materiallage ein thermisch aktivierbarer Klebstoff aufgetragen sein. Anschließend wird das oben beschriebene Verfahren wiederholt, wobei die Klebefuge diesmal zwischen der Oberseite der flexiblen Materiallage und der Unterseite der weiteren flexiblen Materiallage erwärmt wird.

Neben dem Verfahren schlägt die vorliegende Erfindung auch eine Presskaschiervorrichtung und eine Vakuumkaschiervorrichtung vor, um das oben genannte Verfahren auszuführen.

Die Presskaschiervorrichtung umfasst hierfür eine erste den formstabilen Träger haltende Formhälfte und eine zweite konturgebende Formhälfte, wie sie oben bereits erwähnt wurden. Ferner ist eine NIR-Bestrahlungseinrichtung vorgesehen und die zweite Formhälfte wenigstens teilweise NIR-transparent, so dass die Bestrahlung von der NIR-Bestrahlungseinrichtung die zweite Formhälfte passieren kann. Gemäß einer besonders bevorzugten Ausführungsform kann die zweite Formhälfte gekühlt sein, wozu ein transparentes Kühlmittel verwendet wird.

Beim Vakuumkaschieren ist ein Halter für den formstabilen Träger vorgesehen. Dieser kann gemäß einer bevorzugten Ausführungsform gekühlt sein. Ferner umfasst die Vorrichtung eine den Umfang der Oberseite der flexiblen Materiallage überragende Folie sowie eine Vakuumeinrichtung, die ausgestaltet ist, um die Folie durch den Träger gegen die Oberseite der flexiblen Materiallage in Richtung des Trägers zu ziehen. Auch hier ist eine NIR-Bestrahlungseinrichtung vorgesehen und die Folie wenigstens teilweise NIR-transparent, so dass die Bestrahlung durch die Folie hindurch auf die Oberseite der flexiblen Materiallage aufgebracht werden kann.

Es ist besonders bevorzugt, die Formhälften bzw. den Halter nicht zu heizen. Die Aufheizung des thermischen aktivierbaren Klebstoffs in der Fuge erfolgt bei der Erfindung ausschließlich durch die NIR-Bestrählung.

Weitere Merkmale und Vorteile der vorliegenden Erfindung, die alleinstehend oder in Kombination mit einem oder mehreren der oben genannten Merkmale umgesetzt werden können, insofern sich die Merkmale nicht widersprechen, sind aus der folgenden Beschreibung einer bevorzugten Ausführungsform ersichtlicht. Diese Beschreibung erfolgt unter Bezugnahme auf die begleitenden Zeichnungen, in denen:
Figur 1 eine schematische Ansicht eines Presskaschierwerkzeugs gemäß einer Ausführungsform der vorliegenden Erfindung zeigt; und
Figur 2 einen Ausschnitt aus Figur 1 in vergrößertem Maßstab bei aktivierter NIR-Bestrahlung zeigt.

Es versteht sich, dass die im Folgenden beschriebene Ausführungsform nur ein Beispiel ist und vielerlei Abwandlungen und Modifikationen denkbar sind, die dem Fachmann ohne Weiters ersichtlich sind. Auch wird rein beispielhaft die vorliegende Erfindung anhand eines Presskaschierverfahrens und Presskaschierwerkzeugs erläutert, kann jedoch auch im Rahmen eines Vakuumkaschierverfahrens umgesetzt werden.

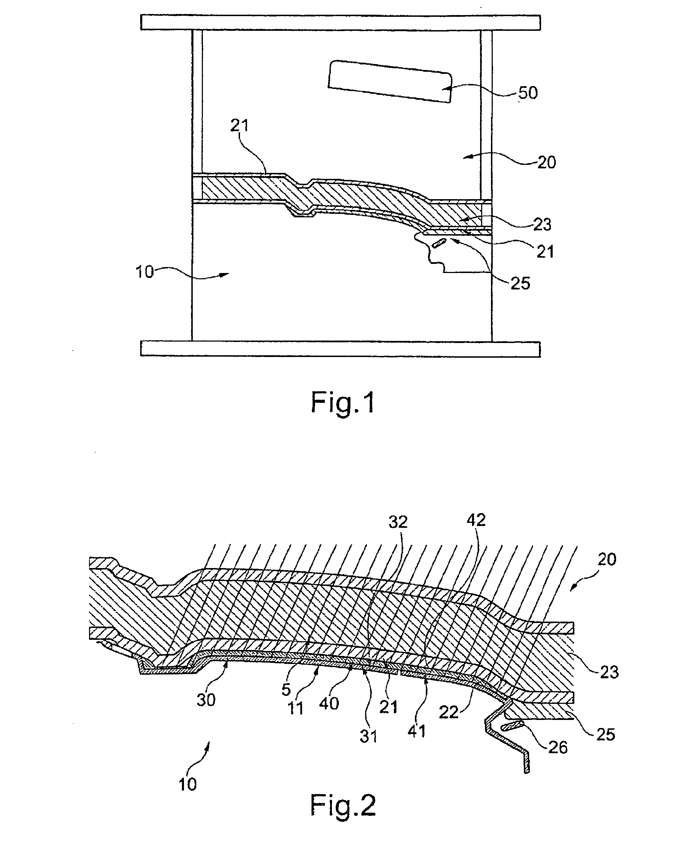

Das in Figur 1 dargestellte Presskaschierwerkzeug umfasst ein Unterwerkzeug 10, die untere Werkzeughälfte, und ein Oberwerkzeug 20, die obere Werkzeughälfte. Bei dem Unterwerkzeug 10 kann es sich um eine Werkzeughälfte aus Aluminium handeln. Die untere Werkzeughälfte 10 ist zur Aufnahme eines formstabilen Trägers 30 (Figur 2) ausgestaltet.

Das Unterwerkzeug 10 kann gegebenenfalls gekühlt sein, ist jedoch unbeheizt. Das Oberwerkzeug 20 umfasst eine Werkzeugschale 21. Die Schale 21 weist eine formgebende Innenkontur 22 auf. Zwischen der formgebenden Innenkontur 22 und einer Oberfläche 11 des Unterwerkzeugs 10, auf der der Träger 30 aufliegt, wird ein Pressspalt definiert. Die Werkzeugschale 21 des Oberwerkzeugs 20 ist aus einem NIR-transparenten Material, z. B. Glas, Plexiglas, etc., gebildet. In der Werkzeugschale 21 sind Kühlkanäle 23 ausgebildet, die von einem NIR-transparenten Kühlmittel, das in den Figuren schraffiert dargestellt ist, durchströmt werden. Hierzu kommt beispielsweise Wasser oder Silikonöl in Frage. Auch die Werkzeugschale 21 ist unbeheizt.

Oberhalb der Werkzeugschale 21 ist ein NIR-Strahler 50 angeordnet. Dieser kann aus mehreren herkömmlichen Halogenstrahlern, z. B. von der Fa. Heraeus gebildet sein. Vorzugsweise kann der NIR-Strahler 50 intermittierend, d. h. diskontinuierlich, aktiviert und deaktiviert werden, um eine intermittierende NIR-Strahlung aufzubringen. Die Strahlungsrichtung des NIR-Strahlers 50 ist dabei vorzugsweise senkrecht zu einem Großteil, d. h. mehr als der Hälfte des zu bestrahlenden Bauteils (siehe Figur 2), insbesondere der Oberseite 41 der flexiblen Materiallage 40 ausgerichtet. Die Richtung der NIR-Strahlung ist in Figur 2 mit S gekennzeichnet.

Der in Figur 2 dargestellte formstabile Träger 30 ist vorzugsweise ein Kunststoffträger und vorzugsweise spritzgegossen. Er weist eine Oberfläche 31 auf. Diese Oberfläche 31 ist dreidimensional gekrümmt, so dass eine Oberflächenkontur gebildet ist. Die der Oberflächenkontur 31 entgegengesetzte Seite 32 des Trägers liegt auf der Oberseite 11 des Unterwerkzeugs 10 auf. Wie es am besten aus Figur 2 ersichtlich ist, liegt die flexible Materiallage 40, bei der es sich gemäß der beispielhaften Ausführungsform um eine Dekorschicht, vorzugsweise aus Echtleder oder Kunstleder handelt, mit ihrer Unterseite 41 bzw. Rückseite auf der Oberflächenkontur 31 des Trägers 30 auf, während die Oberseite 42 der Innenkontur 22 der Werkzeugschale 21 zugewandt ist. In der Fuge zwischen der Oberflächenkontur 31 und der Unterseite 41 ist ein nicht dargestelltes thermisch aktivierbares Klebemittel vorgesehen. Dieses kann auf der Unterseite 41 und/oder der Oberflächenkontur 31 aufgetragen sein. Bei dem Klebemittel kann es sich um einen Hot-Melt oder einen thermisch aktivierbaren Dispersionsklebstoff handeln. Die Aktivierungstemperatur kann in einem Bereich zwischen 50°C und 200°C liegen. Bei einem Hot-Melt liegt sie vorzugsweise bei ca. 70°C. Bei einem Dispersionsklebstoff liegt sie vorzugsweise bei ca. 55°C.

Des Weiteren umfasst die dargestellte Vorrichtung einen Umbugschieber 25 zum Umbugen eines über den formstabilen Träger 30 vorragenden Teils der flexiblen Materiallage 40 im Randbereich des Trägers. Um auch in diesem Bereich den thermisch aktivierbaren Klebstoff zu aktivieren, kann eine weitere Heizvorrichtung 26 vorgesehen sein, die herkömmlicher Art, d. h. Infrarot oder Heißluft, sein kann. Alternativ ist es auch denkbar, hier einen NIR-Strahler einzusetzen.

Im Folgenden wird das erfindungsgemäße Verfahren anhand der in den Figuren 1 und 2 dargestellten Vorrichtung erläutert.

Zunächst wird der formstabile Träger 31 mit der darauf vorfixierten und bereits ausgerichteten flexiblen Materiallage 40 in dem Unterwerkzeug 10 platziert. In diesem Stadium befindet sich das Presskaschierwerkzeug anders als in Figur 1 in einem geöffneten Zustand. Im Anschluss schließt das Presskaschierwerkzeug, indem sich die Werkzeughälften 10 und 20 aufeinander zu bewegen bis in die Stellung, die in den Figuren 1 und 2 dargestellt ist, in der die flexible Materiallage 40 und der formstabile Träger 30 zusammengedrückt werden. Sind die Formhälften geschlossen, wird der NIR-Strahler 50 aktiviert, um die Strahlung S in Richtung der Oberseite 42 der flexiblen Materiallage 40 auszusenden. Dabei passiert die NIR-Strahlung S die NIR-transparente Werkzeugschale 21 sowie das NIR-transparente Kühlmittel in den Kühlkanälen 23. Des Weiteren kann die NIR-Strahlung überraschenderweise auch die flexible Materiallage durchdringen, ohne diese wesentlich zu erwärmen. Dies ist hauptsächlich durch die Beschaffenheit der flexiblen Materiallage und deren geringe Schichtdicke bedingt. So können beispielsweise Leder, Kunstleder, Kunststofffolien, Textile, Gewirke sowie Vliesstoffe eingesetzt werden, die eine Schichtdicke von unterhalb 2,0 mm aufweisen. Als minimale Schichtdicke sind bei Folien 0,2 mm denkbar.

Dadurch wirkt die NIR-Strahlung S direkt in der Klebefuge zwischen der Oberflächenkontur 31 und der Unterseite 41, um den nicht dargestellten thermisch aktivierbaren Klebstoff auf die gewünschte Aktivierungstemperatur zu bringen. Dabei erfolgt die Bestrahlung vorzugsweise intermittierend, d. h. getaktet, so dass die gewünschte Fugentemperatur möglichst genau eingestellt werden kann.

Hat der Klebstoff die gewünschte Fugentemperatur erreicht, wird die obere Werkzeugschale 21 mittels des transparenten Kühlmittels, das die Kühlkanäle 23 durchströmt, gekühlt. Gegebenenfalls kann auch das Unterwerkzeug 10 gekühlt werden. Dadurch kann direkt nach der optimalen Aktivierung des Klebstoffes die Fugentemperatur schnell wieder herabgesetzt werden. Durch die Verwendung von NIR-Strahlern wird die Heizzeit verkürzt. Da die Heizung nicht über die Werkzeughälften wie im Stand der Technik erfolgt, kann unmittelbar daran anschließend das Kühlen erfolgen. Dadurch kann die Gesamtprozesszeit verkürzt werden. Darüber hinaus ergeben sich Energieeinsparungen sowohl beim Heizen und Kühlen sowie eine Erhöhung der Prozesssicherheit. Auch kann eine Erwärmung möglicherweise sensibler flexibler Materiallagen minimiert werden, wodurch deren Oberfläche geschont wird.

## Patentansprüche

1. Verfahren zum Kaschieren einer flexiblen Materiallage (40) mit einer Oberseite (42) und einer Unterseite (41) auf einen formstabilen Träger (30) mit einer dreidimensionalen Oberflächenkontur (31), umfassend die Schritte:
Bereitstellen des formstabilen Trägers (30);
Auflegen der Unterseite (41) der flexiblen Materiallage (40) auf die Oberflächenkontur (31) des formstabilen Trägers (30), wobei auf der Unterseite (41) der flexiblen Materiallage (40) und/oder der Oberflächenkontur (31) des formstabilen Trägers (30) ein thermisch aktivierbarer Klebstoff aufgetragen ist;
Bestrahlen der Oberseite (42) der aufgelegten flexiblen Materiallage (40) mit einer NIR-Strahlung (S) zur Aktivierung des Klebstoffs; **gekennzeichnet durch**
Zusammendrücken der flexiblen Materiallage (40) und des formstabilen Trägers (30) nach und/oder während der Aktivierung des Klebstoffs, wobei das Zusammendrücken der flexiblen Materiallage (40) und des formstabilen Trägers (30) durch Schließen einer ersten den formstabilen Träger haltenden Formhälfte (10) und einer zweiten Kontur gebenden Formhälfte (20) eines Presskaschierwerkzeugs erfolgt, wobei die zweite Formhälfte (20) wenigstens teilweise NIR-transparent ist und die Bestrahlung auf die Oberseite (42) der aufgelegten flexiblen Materiallage (40) **durch** die zweite Formhälfte (20) hindurch erfolgt.

2. Verfahren nach Anspruch 1, bei dem die zweite Formhälfte (20) gekühlt wird, wozu ein NIR-transparentes Kühlmittel Verwendung findet.

3. Verfahren zum Kaschieren einer flexiblen Materiallage (40) mit einer Oberseite (42) und einer Unterseite (41) auf einen formstabilen Träger (30) mit einer dreidimensionalen Oberflächenkontur (31), umfassend die Schritte:
Bereitstellen des formstabilen Trägers (30);
Auflegen der Unterseite (41) der flexiblen Materiallage (40) auf die Oberflächenkontur (31) des formstabilen Trägers (30), wobei auf der Unterseite (41) der flexiblen Materiallage (40) und/oder der Oberflächenkontur (31) des formstabilen Trägers (30) ein thermisch aktivierbarer Klebstoff aufgetragen ist;
Bestrahlen der Oberseite (42) der aufgelegten flexiblen Materiallage (40) mit einer NIR-Strahlung (S) zur Aktivierung des Klebstoffs; **gekennzeichnet durch**
Zusammendrücken der flexiblen Materiallage (40) und des formstabilen Trägers (30) nach und/oder während der Aktivierung des Klebstoffs, wobei das Zusammendrücken der flexiblen Materiallage (40) und des formstabilen Trägers (30) durch eine den Umfang der Oberseite der flexiblen Materiallage überragende Folie, die über ein Vakuum gegen die die Oberseite der aufgelegten flexiblen Materiallage (40) in Richtung des Trägers (50) gezogen wird, erfolgt, wobei die Folie wenigstens teilweise NIR-transparent ist und die Bestrahlung auf die Oberseite der aufgelegten flexiblen Materiallage **durch** die Folie hindurch erfolgt.

4. Verfahren nach einem der vorstehenden Ansprüche, bei dem die flexible Materiallage (40) im Wesentlichen Licht undurchlässig ist.

5. Verfahren nach Anspruch 4, bei dem die flexible Materiallage (40) Leder, künstliches Leder, eine Kunststofffolie, ein Textil, ein Vlies oder ein Gewirke umfasst.

6. Verfahren nach einem der vorstehenden Ansprüche, ferner umfassend die Schritte: Auflegen einer weiteren flexiblen Materiallage mit einer Oberseite und einer Unterseite auf die Oberseite der flexiblen Materiallage nach dem Kaschieren der flexiblen Materiallage auf den formstabilen Träger, wobei auf der Unterseite der weiteren flexiblen Materiallage ein thermisch aktivierbarer Klebstoff aufgetragen ist; Bestrahlen der Oberseite der aufgelegten weiteren flexiblen Materiallage mit einer NIR-Strahlung zur Aktivierung des Klebstoffs; Zusammendrücken der weiteren flexiblen Materiallage mit dem Verbund aus flexibler Materiallage und formstabilem Träger nach und/oder während der Aktivierung des Klebstoffs, wobei die flexible Materiallage eine Haptikschicht und die weitere flexible Materiallage eine Dekorschicht ist.

7. Vorrichtung zum Kaschieren einer flexiblen Materiallage (40) mit einer Oberseite (42) und einer Unterseite (41) auf einen formstabilen Träger (30) mit einer dreidimensionalen Oberflächenkontur (31), umfassend eine erste den formstabilen Träger haltenden Formhälfte (10), eine zweite Kontur gebende Formhälfte (20), wobei die zweite Formhälfte (20) wenigstens teilweise NIR-transparent ist, und eine NIR-Bestrahlungseinrichtung (50), die zur Bestrahlung der Oberseite (42) der flexiblen Materiallage (40) durch die zweite Formhälfte (20) hindurch ausgestaltet ist.

8. Vorrichtung zum Kaschieren einer flexiblen Materiallage (40) mit einer Oberseite (42) und einer Unterseite (41) auf einen formstabilen Träger (30) mit einer dreidimensionalen Oberflächenkontur (31), umfassend einen Halter für den formstabilen Träger, eine den Umfang der Oberseite der flexiblen Materiallage überragende Folie, eine Vakuumeinrichtung, die ausgestaltet ist, um die Folie durch den Träger gegen die Oberseite der aufgelegten flexiblen Materiallage in Richtung des Trägers zu ziehen, wobei die Folie wenigstens teilweise NIR-transparent ist und eine NIR-Bestrahlungseinrichtung, die zur Bestrahlung der Oberseite der flexiblen Materiallage durch die Folie hindurch ausgestaltet ist.

9. Vorrichtung nach Anspruch 7 oder 8, wobei die Formhälften (10, 20) bzw. der Halter unbeheizt sind.

## Claims

1. Method for laminating a flexible material layer (40) having an upper side (42) and a rear side (41) onto a dimensionally stable substrate (30) having a three-dimensional surface contour (31), comprising the steps:
providing the dimensionally stable substrate (30);
laying the rear side (41) of the flexible material layer (40) onto the surface contour (31) of the dimensionally stable substrate (30), wherein a thermally activated adhesive being applied to the rear side (41) of the flexible material layer (40) and/or to the surface contour (31) of the dimensionally stable substrate (30);
irradiating the upper side (42) of the flexible material layer (40) with NIR radiation (S) to activate the adhesive;
**characterized by**
pressing together the flexible material layer (40) and the dimensionally stable substrate (30) after and/or during the activation of the adhesive, wherein the flexible material layer (40) and the dimensionally stable substrate (30) being pressed together by closing a first mould half (10), holding the dimensionally stable substrate, and a second mould half (20), providing a contour, of a press laminating tool, wherein the second mould half (20) being at least partially NIR transparent and the irradiation of the upper side (42) of the flexible material layer (40) laid on being carried out through the second mould half (20).

2. Method according to Claim 1, in which the second mould half (20) is cooled, for which purpose a coolant transparent to NIR is used.

3. Method for laminating a flexible material layer (40) having an upper side (42) and a rear side (41) onto a dimensionally stable substrate (30) having a three-dimensional surface contour (31), comprising the steps:
providing the dimensionally stable substrate (30);
laying the rear side (41) of the flexible material layer (40) onto the surface contour (31) of the dimensionally stable substrate (30), wherein a thermally activated adhesive being applied to the rear side (41) of the flexible material layer (40) and/or to the surface contour (31) of the dimensionally stable substrate (30);
irradiating the upper side (42) of the flexible material layer (40) with NIR radiation (S) to activate the adhesive;
**characterized by**
pressing together the flexible material layer (40) and the dimensionally stable substrate (30) after and/or during the activation of the adhesive, wherein the flexible material layer (40) and the dimensionally stable substrate (30) being pressed together by a foil projecting beyond the circumference of the upper side of the flexible material layer, which is drawn by a vacuum in the direction of the substrate (50) against the upper side of the flexible material layer (40) laid on, wherein the foil being at least partially NIR transparent and the irradiation of the upper side of the flexible material layer laid on being carried out through the foil.

4. Method according to one of the preceding claims, in which the flexible material layer (40) is substantially impermeable to light.

5. Method according to Claim 4, in which the flexible material layer (40) comprises leather, artificial leather, a plastic film, a textile, a nonwoven or a fabric.

6. Method according to one of the preceding claims, further comprising the steps: laying a further flexible material layer having an upper side and a rear side onto the upper side of the flexible material layer following the lamination of the flexible material layer onto the dimensionally stable substrate, wherein a thermally activated adhesive being applied to the rear side of the further flexible material layer; irradiating the upper side of the further flexible material layer with NIR radiation in order to activate the adhesive; pressing together the further flexible material layer with the composite made of flexible material layer and dimensionally stable substrate after and/or during the activation of the adhesive, wherein the flexible material layer being a haptic layer and the further flexible material layer being a decorative layer.

7. Apparatus for laminating the flexible material layer (40) having an upper side (42) and a rear side (41) onto a dimensionally stable substrate (30) having a three-dimensional surface contour (31), comprising a first mould half (10) holding the dimensionally stable substrate, a second mould half (20) providing a contour, wherein the second mould half (20) being at least partially NIR transparent, and an NIR irradiation device (50), which is configured so as to irradiate the upper side (42) of the flexible material layer (40) through the second mould half (20).

8. Apparatus for laminating a flexible material layer (40) having an upper side (42) and a rear side (41) onto a dimensionally stable substrate (30) having a three-dimensional surface contour (31), comprising a holder for the dimensionally stable substrate, a foil projecting beyond the circumference of the upper side of the flexible material layer, a vacuum device, which is configured so as to draw the foil in the direction of the substrate through the substrate against the upper side of the flexible material layer laid on, wherein the foil being at least partially NIR transparent, and an NIR irradiation device, which is configured so as to irradiate the upper side of the flexible material layer through the foil.

9. Apparatus according to Claim 7 or 8, wherein the mould halves (10, 20) and the holder being unheated.

## Revendications

1. Procédé de contrecollage d'une couche de matériau flexible (40) ayant un côté supérieur (42) et un côté inférieur (41) sur un support (30) de forme stable ayant une structuration de surface tridimensionnelle (31), comprenant les étapes suivantes :
fourniture du support (30) de forme stable ;
application du côté inférieur (41) de la couche de matériau flexible (40) sur la structuration de surface (31) du support (30) de forme stable, un adhésif activable thermiquement étant appliqué sur le côté inférieur (41) de la couche de matériau flexible (40) et/ou de la structuration de surface (31) du support (30) de forme stable ;
irradiation du côté supérieur (42) de la couche de matériau flexible appliquée (40) avec un rayonnement IRP (S) pour l'activation de l'adhésif ; **caractérisé par**
la compression de la couche de matériau flexible (40) et du support (30) de forme stable après et/ou pendant l'activation de l'adhésif, la compression de la couche de matériau flexible (40) et du support (30) de forme stable s'effectuant par fermeture d'une première moitié de moule (10) retenant le support de forme stable et d'une deuxième moitié de moule (20), conférant une structuration, d'un outil de contrecollage par compression, la deuxième moitié de moule (20) étant au moins en partie transparente aux IRP et l'irradiation s'effectuant sur le côté supérieur (42) de la couche de matériau flexible appliquée (40) à travers la deuxième moitié de moule (20).

2. Procédé selon la revendication 1, dans lequel la deuxième moitié de moule (20) est refroidie, ce pour quoi on utilise un réfrigérant transparent aux IRP.

3. Procédé de contrecollage d'une couche de matériau flexible (40) ayant un côté supérieur (42) et un côté inférieur (41) sur un support (30) de forme stable ayant une structuration de surface tridimensionnelle (31), comprenant les étapes suivantes :
fourniture du support (30) de forme stable ;
application du côté inférieur (41) de la couche de matériau flexible (40) sur la structuration de surface (31) du support (30) de forme stable, un adhésif activable thermiquement étant appliqué sur le côté inférieur (41) de la couche de matériau flexible (40) et/ou de la structuration de surface (31) du support (30) de forme stable ;
irradiation du côté supérieur (42) de la couche de matériau flexible appliquée (40) avec un rayonnement IRP (S) pour l'activation de l'adhésif ; **caractérisé par**
la compression de la couche de matériau flexible (40) et du support (30) de forme stable après et/ou pendant l'activation de l'adhésif, la compression de la couche de matériau flexible (40) et du support (30) de forme stable s'effectuant par le biais d'une feuille dépassant du pourtour du côté supérieur de la couche de matériau flexible, qui est tirée par le biais d'un vide contre le côté supérieur de la couche de matériau flexible appliquée (40) dans la direction du support (50), la feuille étant au moins en partie transparente aux IRP et l'irradiation s'effectuant sur le côté supérieur de la couche de matériau flexible appliquée à travers la feuille.

4. Procédé selon l'une quelconque des revendications précédentes, dans lequel la couche de matériau flexible (40) est essentiellement imperméable à la lumière.

5. Procédé selon la revendication 4, dans lequel la couche de matériau flexible (40) comprend du cuir, du cuir artificiel, une feuille de plastique, un textile, un non tissé ou un tissu à mailles.

6. Procédé selon l'une quelconque des revendications précédentes, comprenant en outre les étapes suivantes :
application d'une couche de matériau flexible supplémentaire ayant un côté supérieur et un côté inférieur sur le côté supérieur de la couche de matériau flexible après le contrecollage de la couche de matériau flexible sur le support de forme stable, un adhésif activable thermiquement étant appliqué sur le côté inférieur de la couche de matériau flexible supplémentaire ; irradiation du côté supérieur de la couche de matériau flexible supplémentaire appliquée avec un rayonnement IRP pour l'activation de l'adhésif ;
compression de la couche de matériau flexible supplémentaire avec l'assemblage de la couche de matériau flexible et du support de forme stable après et/ou pendant l'activation de l'adhésif, la couche de matériau flexible étant une couche haptique et la couche de matériau flexible supplémentaire étant une couche décorative.

7. Dispositif de contrecollage d'une couche de matériau flexible (40) ayant un côté supérieur (42) et un côté inférieur (41) sur un support (30) de forme stable ayant une structuration de surface tridimensionnelle (31), comprenant une première moitié de moule (10) retenant le support de forme stable, une deuxième moitié de moule (20) conférant une structuration, la deuxième moitié de moule (20) étant au moins en partie transparente aux IRP, et un dispositif d'irradiation aux IRP (50) qui est configuré pour irradier le côté supérieur (42) de la couche de matériau flexible (40) à travers la deuxième moitié de moule (20).

8. Dispositif de contrecollage d'une couche de matériau flexible (40) ayant un côté supérieur (42) et un côté inférieur (41) sur un support (30) de forme stable ayant une structuration de surface tridimensionnelle (31), comprenant un dispositif de retenue pour le support de forme stable, une feuille dépassant du pourtour du côté supérieur de la couche de matériau flexible, un dispositif de vide, qui est configuré pour tirer, à travers le support, la feuille dans la direction du support contre le côté supérieur de la couche de matériau flexible appliquée, la feuille étant au moins en partie transparente aux IRP, et un dispositif d'irradiation aux IRP, qui est configuré pour irradier le côté supérieur de la couche de matériau flexible à travers la feuille.

9. Dispositif selon la revendication 7 ou 8, dans lequel les moitiés de moule (10, 20) ou le dispositif de retenue ne sont pas chauffés.
